Europäisches Patentamt

European Patent Office

Office européen des brevets

(11) Publication number: **0 656 634 A2**

## (12) EUROPEAN PATENT APPLICATION

(21) Application number: **94118867.4**

(22) Date of filing: **30.11.94**

(51) Int. Cl.6: **H01B 3/44**

(30) Priority: **03.12.93 US 161728**

(43) Date of publication of application:
**07.06.95 Bulletin 95/23**

(84) Designated Contracting States:
**DE FR GB IT**

(71) Applicant: **The Geon Company**
**6100 Oak Tree Boulevard**
**Cleveland,**
**Ohio 44131 (US)**

(72) Inventor: **Boo, Khim H.**
**19460 Knowlton Parkway**
**Strongvillle,**
**Ohio 44136 (US)**
Inventor: **Smith, Gregory Francis**
**605 Harvard Avenue**
**Elyria,**
**Ohio 44035 (US)**

(74) Representative: **von Kreisler, Alek,**
**Dipl.-Chem. et al**
**Patentanwälte**
**von Kreisler-Selting-Werner**
**Bahnhofsvorplatz 1 (Deichmannhaus)**
**D-50667 Köln (DE)**

(54) **Lead-free conductor coverings.**

(57) Lead-free thermoplastic polyvinyl chloride conductor coverings are disclosed which are free of lead and molecular sieve. The coverings comprise:
100 parts by weight polyvinyl chloride,
from 5 to 100 parts by weight of plasticizer, from 3 to 50 weight parts of calcined clay and a stabilizer system consisting essentially of at least two different organometal salts, and from 0.5 to 10 weight parts of finely divided hydrotalcite having the formulae:

$$[(M_1^{2+})y_1\ (M_2^{2+})y_2]_{1-x}\ M_x^{3+}(OH)_2\ A_{x/n}^{n-}\ mH_2O \qquad (I)$$

or

$$Mg_{1-x}\ Al_x\ (OH)_2\ A_{x/n}^{n-}\ mH_2O \qquad (II)$$

or

$$Mg_{1-x}\ Al_x\ (OH)_{2+x}\ mH_2O \qquad (III)$$

wherein $M_1^{2+}$ represents at least one divalent metal cation, $M_2^{2+}$ represents at least one divalent metal cation, $M^{3+}$ represents a trivalent metal cation, $A^{n-}$ represents at least one anion having a valency of n and x, y1, y2 and m are represented by the following expressions
$0 < x \leq 0.5$, $0 < y_1$, $0 < y_2$, $0.5 \leq (y_1 + y_2) < 1$, and $0 \leq m < 2$;
or
a product resulting from surface treatment of I, II, or III with an anionic surface active agent.

EP 0 656 634 A2

Rank Xerox (UK) Business Services
(3.10/3.09/3.3.4)

## Field of the Invention

The invention relates to conductor coverings such as electrical insulation and cable jacketing made from thermoplastic compounded polyvinyl chloride.

## Background of the Invention

There is increasing demand for eliminating heavy metals, especially lead which is considered toxic as disposed waste. Removal of lead in thermoplastics adapted for wire and cable coverings is an increasing concern for post-industrial disposal. Recent patent literature has provided some approaches for the substitution of lead-based components. For example, various $\beta$-diketone compounds including salts thereof are suggested in synergistic combination with hydrotalcite. See U.S. Patent No. 4,427,816. A combination of hydrotalcite and molecular sieve zeolite is suggested in U.S. Patent No. 5,216,058. A combination of hydrotalcite, zinc zeolite and zinc carboxylate is disclosed in U.S. Patent No. 5,141,880.

Electrical wire insulation and cable jacketing, hereinafter referred to as conductor covering, must have a combination of properties characterized typically by the tensile strength, elongation and elongation retention after elevated temperature aging, brittleness temperature, volume resistivity, dielectric constant, and Shore Hardness. Specific performance ratings exist for commercially designated conductor coverings, for example electronic wires, CL2/CL2X and CL3/CL3X insulation and jacketing, apparatus wires, 75°C rated jacketing, 105°C rated jacketing, telecommunicationS wire and THHN/THWN (**T**hermoplastic **H**igh **H**eat **N**ylon coated/**T**hermoplastic **H**eat **W**et location **N**ylon coated) building wire, and the like, hereinafter collectively referred to as conductor covering. Typical nominal physical properties desired of conductor coverings are:

| | |
|---|---|
| Shore A Hardness | >65 |
| Tensile Strength (psi) | >1500 |
| Elongation (%) | >150 |
| Aged retention* (%) | >70+ |
| Brittleness Temp (°C) | < -30 |
| Volume Resistivity (x$10^{12}$ ohm-cm) | > 2 |
| Tensile retention in ASTM #2 oil (4 hrs at 70°C) (%) | >70 |

* aging temperature and time vary with compound temperature rating

U.S. Patent No. 5,216,058 ('058) teaches that a synergism occurs in the use of hydrotalcite and zeolite for achieving improved volume resistivity of electrical conductor covering. Formulas containing hydrotalcite alone, hydrotalcite and diketone, and zeolite alone were shown to be inferior in insulating properties compared with the inventive combination of hydrotalcite and zeolite.

Since lead-based stabilizers are relatively inexpensive and highly effective, it is a technical challenge to devise adequate substitutes. Commercial benefits would accrue from avoiding increased costs for lead substitutes, and especially if improvements are achieved in extending the melt processing window for thermoplastic conductor coverings.

Upon further investigation it has been discovered that equal or better electrical insulating performance is achieved while at the same time improved processing stability is obtained for the invention disclosed hereinbelow.

## Summary of the Invention

In accordance with the invention there are provided lead-free thermoplastic polyvinyl chloride conductor coverings devoid of lead and molecular sieve and comprising:
100 parts by weight polyvinyl chloride,
from 5 to 100 parts by weight of plasticizer, from 3 to 50 weight parts of calcined clay and a stabilizer system consisting essentially of at least two different organometal Salts, and from 0.5 to 10 weight parts of finely divided hydrotalcite having the formulae:

$$[(M_1^{2+})y_1 \ (M_2^{2+})y_2]_{1-x} \ M_x^{3+}(OH)_2 \ A_{x/n}^{n-} \ mH_2O \qquad (I)$$

or

$$Mg_{1-x} Al_x (OH)_2 A_{x/n}^{n-} \cdot mH_2O \qquad (II)$$

or

$$Mg_{1-x} Al_x (OH)_{2+x} \cdot mH_2O \qquad (III)$$

wherein $M_1^{2+}$ represents at least one divalent metal cation, $M_2^{2+}$ represents at least one divalent metal cation, $M^{3+}$ represents a trivalent metal cation, $A^{n-}$ represents at least one anion having a valency of n and x, y1, y2 and m are represented by the following expressions

$0 < x \leq 0.5$, $0 < y_1$, $0 < y_2$, $0.5 \leq (y_1 + y_2) < 1$, and $0 \leq m < 2$;
or
a product resulting from surface treatment of I, II, or III with an anionic surface active agent.

In accordance with the invention there is also provided a method of use for a polyvinyl chloride compound for conductor coverings, the compound devoid of lead and molecular sieve and comprising:
100 parts by weight polyvinyl chloride,
from 5 to 100 parts by weight of plasticizer, from 3 to 50 weight parts of calcined clay and a stabilizer system consisting essentially of at least two different organometal salts, and from 0.5 to 10 weight parts of finely divided hydrotalcite having the formulae:

$$[(M_1^{2+})y_1 (M_2^{2+})y_2]_{1-x} M_x^{3+}(OH)_2 A_{x/n}^{n-} \cdot mH_2O \qquad (I)$$

or

$$Mg_{1-x} Al_x (OH)_2 A_{x/n}^{n-} \cdot mH_2O \qquad (II)$$

or

$$Mg_{1-x} Al_x (OH)_{2+x} \cdot mH_2O \qquad (III)$$

wherein $M_1^{2+}$ represents at least one divalent metal cation, $M_2^{2+}$ represents at least one divalent metal cation, $M^{3+}$ represents a trivalent metal cation, $A^{n-}$ represents at least one anion having a valency of n and x, y1, y2 and m are represented by the following expressions
$0 < x \leq 0.5$, $0 < y_1$, $0 < y_2$, $0.5 \leq (y_1 + y_2) < 1$, and $0 \leq m < 2$;
or
a product resulting from surface treatment of I, II, or III with an anionic surface active agent.

## DETAILED DESCRIPTION OF THE PREFERRED EMBODIMENTS

An essential component of the formulation for the articles of the invention is polyvinyl chloride. Polyvinyl chloride polymers are commercially available worldwide. Polyvinyl chloride polymers contemplated for use in the present invention include those prepared in a variety of ways including: mass, suspension, dispersion, and emulsion processes. From a practical and economic standpoint, the most preferred PVC resin is suspension polymerized. Suspension PVC resin used herein is a particulate homopolymer or copolymer resin having a particle size average ranging from about 50 microns to 250 microns, and more typically from 100 to 150 microns. At least about 80% of the PVC must be uncrosslinked. Copolymers of vinyl chloride and at least one comonomer include copolymers with minor amounts of an alpha olefin such as ethylene, butene, and hexene, and the like; unsaturated carboxylic acids such as acrylic acid, methacrylic acid, ethacrylic acid, α-cyanoacrylic acid, and the like; esters of acrylic acid, for example, methyl acrylate, ethyl acrylate, butyl acrylate, octyl acrylate, cyanoethyl acrylate, and the like; vinyl esters such as vinyl acetate and vinyl propionate; esters of methacrylic acid, such as methyl methacrylate, ethyl methacrylate, hydroxyethyl acrylate, butyl methacrylate, and the like; nitriles, such as acrylonitrile and methacrylonitrile; acrylamides, such as methyl acrylamide, N-butoxy methacrylamide, and the like; halogen containing vinyl monomers such as vinyl fluoride, vinylidene fluoride, and vinyl bromide; vinyl ethers such as ethylvinyl ether, chloroethyl vinyl ether and the like; the vinyl ketones, styrene derivatives including α-methyl styrene, vinyl toluene, chlorostyrene; vinyl naphthalene; cross-linking monomers such as diallyl phthalate, trimethylol propane triacrylate, allyl methacrylate and the like; allyl and vinyl chloroacetate, vinyl acetate, vinyl pyridine, and methyl vinyl ketone; and other copolymerizable monomers or mixtures of monomers having suitable reactivity ratios with vinyl chloride and known to those skilled in the PVC polymerization art. Uncrosslinked homopolymers essentially soluble in organic solvent are most preferred.

The inherent viscosity (I.V.) (ASTM D-1243) of the soluble fraction of polyvinyl chloride, used in this invention generally ranges from about 0.9 to about 1.4, with a preferred I.V. range of from about 0.9 to about 1.2 and a most preferred I.V. range of from about 0.92 to about 1.12. The components other than PVC are used in amounts expressed as weight parts per 100 weight parts of PVC (phr).

The hydrotalcite used in this invention has the formula:

$$[(M_1^{2+})y_1 \, (M_2^{2+})y_2]_{1-x} \, M_x^{3+}(OH)_2 \, A_{x/n}^{n-} \, mH_2O \qquad (I)$$

or

$$Mg_{1-x} \, Al_x \, (OH)_2 \, A_{x/n}^{n-} \, mH_2O \qquad (II)$$

or

$$Mg_{1-x} \, Al_x \, (OH)_{2+x} \, mH_2O \qquad (III)$$

or a product resulting from surface treatment of I, II, or III with an anionic surface active agent,

wherein $M_1^{2+}$ represents at least one divalent metal cation, $M_2^{2+}$ represents at least one divalent metal cation, $M^{3+}$ represents a trivalent metal cation, $A^{n-}$ represents at least one anion having a valency of n and x, y1, y2 and m are represented by

$0 < x \leq 0.5$, $0 < y_1$, $0 < y_2$, $0.5 \leq (y_1 + y_2) < 1$, and $0 \leq m < 2$;

In formula (I), $M_1^{2+}$ may be at least one divalent metal selected from the group consisting of Mg, Ca, Sr and Ba. Mg, or Ca, or a combination of Mg and Ca, and a combination of Mg and Ba are preferred. Mg alone is most preferred.

In formula (I), $M_2^{2+}$ may be at least one divalent metal selected from group consisting of Zn, Cd, and Sn. Zn, or Cd or both are especially preferred.

In formula (I), $M^{3+}$ is a trivalent metal, and is for example, Al, Bi, In, and Ga. Of these, Al is most preferred.

In formula (I) and (II), $A^{n-}$ represents at least one anion having a valence of n such as $CO_3^{2-}$, $OH^-$, $HCO_3^-$, $ClO_4^-$, an acetate ion (-), a salicylate ion (-), a citrate ion (3-), a tartrate ion, as well as the following

$NO_3^-$, $I^-$, $COO^{2-}$ and $[Fe(CN)_6]^{4-}$ . $CO_3^{2-}$, and $OH^-$ $COO$

are preferred. The most preferred anion is $CO_3^{2-}$.

In each formula, x is a positive number of $0 < x \leq 0.5$, preferably $0.2 \leq x \leq 0.5$, more preferably $0.2 \leq x \leq 0.4$, especially preferably $0.25 \leq x \leq 0.35$ and m is a number represented by $0 \leq m$, especially $0 \leq m \leq 0.6$ . Most preferred is m = 0.

In formula (I) y1 and y2 are positive numbers satisfying the expressions $0 < y_1$, $0 < y_2$, and $0.5 \leq y_1 + y_2 \leq 1$. Preferably $y_1 \leq y_2$, especially preferably $y_1 < y_2$.

Examples of preferred compounds of formula (I) may be represented by the following formula:

$$[(Mg^{2+} \text{ or } Mg^{2+} \text{ and } Ca^{2+})_{y1} \, (Zn^{2+} \text{ and/or} \qquad (IV) \quad Cd^{2+})_{y2}]_{1-x} \, Al_x^{3+}(OH)_2 \, (CO_3)_{x/2}.mH_2O$$

wherein x, y1, y2 and m are as defined with regard to formula (I).

The hydrotalcite may be surface-treated with a surface-treating agent in order to improve its compatibility and dispersibility in PVC. The surface-treating agent includes, for example, higher fatty acids, anionic surface-active agents, silane-type coupling agents, titanate coupling agents, and esters of glycerol with fatty acids. Specific examples of such surface-treating agents are higher fatty acids such as stearic acid, oleic acid and lauric acid; anionic surface-active agents such as sodium stearate, sodium oleate and sodium laurylbenzenesulfonate; silane-type or titanate-type coupling agents such as vinyltriethoxysilane, gammamethacryloxypropyltriethoxysilane, isopropyltriisostearyl titanate and isopropyltridecylbenzenesufonyl titanate, glycerol esters of fatty acids such as glycerol monostearate and glycerol mono-oleate. The surface treatment can be carried out by mechanically mixing a surface-treating agent with a solvent and treating the hydrotalcite solid and drying to a powder under heat or without heating. When the surface-treating agent can be melted under heat, the surface treatment may be carried out by mechanically mixing the surface-treating agent and the hydrotalcite under heat melting conditions. After thorough mixing, the mixture may, as required, be subjected to water washing, dehydration, drying, pulverization, classification, etc. to obtain a surface-treated product. The most preferred hydrotalcite embodiment is pre-treated by removal of water of crystallization, and has a BET specific surface area of from about 5 to 20 $m^2/g$ and a particle size such that at least 80% of the particles are less than 1 $\mu$m with essentially no out-sized particles larger than about 5 $\mu$m. Commercial grades are available from Kyowa Chemicals Industry Company, Ltd., Japan. The most preferred hydrotalcite has the formula: $Mg_4 \ Al_2 \ (OH)_{12} \cdot A \cdot mH_2O$ , wherein m = 0, and A = $CO_3{}^{2-}$.

## Organo Metal Salt Stabilizers

At least two different organo metal salts are included in this invention. These include the organic carboxylate, phenolate or sulfonate metal salts. The organo metal salts can be salts of any metal of Group II of the Periodic Table, such as calcium, barium, magnesium and strontium, as well as tin, zinc, cadmium, potassium, aluminum, zirconium and antimony. Examples are: calcium and zinc carboxylate salts, magnesium-zinc carboxylate salts, barium-cadmium carboxylate salts, barium-zinc carboxylate salts, and carboxylate salts of barium-cadmium-zinc, and calcium-magnesium-tin-zinc. Other useful metal salt combinations are for example, strontium-zinc, potassium-zinc, potassium-cadmium-zinc and potassium-barium-cadmium. A combination of calcium and zinc carboxylate salt is most preferred. Examples of over based organic sulfonate and phenolates of alkaline and alkaline earth metals is disclosed in U.S. Patent No. 4,252,698 incorporated herein by reference.

Organic carboxylate moieties in the organometal salts will ordinarily have from about six to about twenty-four carbon atoms, and can be any organic nonnitrogenous monocarboxylic acid, such as the aliphatic, aromatic, alicyclic and oxygen-containing heterocyclic organic acids. By the term "aliphatic acid" is meant any open-chain carboxylic acid, substituted, if desired, with nonreactive groups, such as halogen, sulfur and hydroxyl. By the term "alicyclic" it is intended any cyclic acid in which the ring is nonaromatic and composed solely of carbon atoms, and such acids may if desired have inert, nonreactive substituents such as halogen, hydroxyl, alkyl radicals, alkenyl radicals and other carbocyclic ring structures condensed therewith. The oxygen-containing heterocyclic compounds can be aromatic or nonaromatic and can include oxygen and carbon in the ring structure, such as alkyl-substituted furoic acid. The aromatic acids likewise can have nonreactive ring substitutents such as halogen, alkyl and alkenyl groups, and other saturated or aromatic rings condensed therewith.

As exemplary of the acids which can be used in the form of their metal salts there can be mentioned the following organic moieties: hexoic acid, 2-ethylhexoic acid, n-octoic acid, isooctoic acid, pelargonic acid, neodecanoic acid, capric acid, undecylic acid, lauric acid, myristic acid, palmitic acid, margaric acid, stearic acid, 12-hydroxystearic acid, oleic acid, ricinoleic acid, erucic acid, behenic acid, chlorcaproic acid, hydroxy capric acid, benzoic acid, salicylic acid, 5-t-octyl salicylic acid, napthoic acid, 1-naphthalene acetic acid, orthobenzoyl benzoic acid, petroleum naphthenic acids, abietic acid, dihydroabietic acid, hexahydrobenzoic acid, and methyl furoic acid, as well as partially esterified dibasic acids such as monobutylphthalate, isooctylmaleate and 2-ethoxyethyl maleate.

Examples of suitable salts include barium di(nonylphenolate), strontium di(nonylphenolate), strontium di(amylphenolate), barium di(octylphenolate), strontium di(octylphenolate), barium di(nonyl-o-cresolate), cadmium-2-ethyl-hexoate, cadmium laurate, cadmium stearate, zinc caprylate, cadmium caprate, barium stearate, barium-2-ethylhexoate, barium laurate, barium ricinoleate, aluminum stearate, magnesium stearate, calcium octoate, calcium stearate, cadmium naphthenate, cadmium benzoate, cadmium p-tert butylbenzoate, barium octyl salicylate, calcium epoxy stearate, strontium epoxy stearate, cadmium epoxy stearate, and cadmium salt of epoxidized acids of soybean oil. Where a barium salt is one of the two metal salts employed, the other salt is preferably cadmium or zinc or a combination of cadmium and zinc. A specific example of a barium/cadmium mixed salt is barium di(nonylphenolate)/cadmium octoate. Calcium and zinc salts are most preferred.

The preferred amount of calcium carboxylate ranges from 0.1 to 1 phr, and the preferred amount of zinc carboxylate ranges from 0.1 to 0.5 phr. The examples below illustrate the most preferred amounts. It has been found that unexpected improvements in both electrical resistivity and dynamic thermal stability occur by a reduction in the amount of organo metal salts to 1.0 phr total or less. In the most preferred embodiments the total organometal salt content comprises 60% to 80% of calcium or magnesium carboxylate and 20% to 40% zinc carboxylate. It has been observed that amounts greater than 1.0 phr total of organo metal salt causes a reduction in physical and electrical properties. If more zinc carboxylate is used, increased early yellowing is likely. If more than 1.0 phr of calcium carboxylate is used, there is increased incidence of incompatibility resulting in surface blooming and possibly exudation. The volume resistivity and dynamic thermal stability were unexpectedly improved when employing the preferred essential stabilizer combination in the absence of zeolite and consisting of dehydrated hydrotalcite in an amount of between 3 to 6 phr, $\beta$-diketone in an amount of from 0.1 to 0.5 phr, calcium carboxylate at from about 0.3 to 0.7 phr, and zinc carboxylate at from about 0.1 to 0.3 phr when calcined clay was added to the compound. In another preferred embodiment wherein the amount of dehydrated hydrotalcite was limited to from 2 to 3 phr, the essential stabilizer combination resulting in unexpected improvements in the absence of zeolite consisted essentially of dehydrated hydrotalcite at 2 to 3 phr, $\beta$-diketone in an amount of from 0.1 to 0.5 phr, calcium carboxylate at from about 0.3 to 0.7 phr, zinc carboxylate at from about 0.1 to 0.3 phr, a mixed metal salt stabilizer comprising from 1 to 1.5 phr of barium/zinc metal salts, and a phosphite stabilizer in an amount of from 0.2 to 0.6 phr.

Optional Components

Optional antioxidant and phosphite may be incorporated into the conductor coverings of the present invention. Representative antioxidants are, for example, 3-methyl-6-t-butylphenol/crotonaldehyde which is available under the TOPANOL® CA trademark from ICI Americas, Inc., methylene (3,5-di-t-butyl-4-hydroxyhydrocinnamate) methane sold under the IRGANOX®1010 trademarks by Ciba Geigy Corporation and dipentaerythritol. Representative phosphites include triphenyl phosphite, diphenylalkyl phosphite, phenyldialkyl phosphite, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, tristearyl sorbitol triphosphite. Tris-(2,4-di-tert-butylphenyl) phosphite is a preferred optional phosphite stabilizer.

$\beta$-Diketones can be advantageously included in an amount ranging from 0.02 to about 1 weight parts per 100 parts PVC, and preferably from 0.02 to about 0.5 phr. A variety of 1,3-diketones are disclosed in U.S. Patent no. 4,427,816, incorporated herein by reference. Some of the commonly employed types include dehydroacetic acid, dehydropropionylacetic acid, cyclohexane-1,3-dione, 5,5-dimethyl cyclohexane and 1,3-dione, palmitoyltetralone,2-acetylcyclohexanone, benzoylacetone, tribenzoylmethane, dibenzoylmethane, acetylacetone and Bis-(cyclohexanoyl)methane, including mixtures and Li, Na, K, Mg, Ca, Ba, Sr, Zn, Al, Zr, and Sn salts thereof. Diketones are commercially available from Rhone-Polenc.

Clay is an essential component referred to herein and generally exists as one or more types of complex aluminosilicates of which Kaolin is the most widely used generic class. Air or water classified grades which are partially of fully calcined and having B.E.T. surface area of 5-25 $m^2$/g and average particle size of from 0.5 $\mu$m to 5$\mu$m are suitable. Whether partially or fully calcined, these are referred to herein as calcined clay. Commercial sources in the U.S.A. include Engelhard Minerals and Chemicals Divisions, Freeport Kaolin Co, J.M. Huber Corp, and Burgess Pigment Co., Inc. Generally an amount of from 3 to 50 weight parts per 100 weight parts PVC is suggested. Preferably from 5 to about 20 phr calcined clay is used.

**Plasticizers**

Conventional plasticizer(s) incorporated herein include(s), for example, phthalate esters known in the art under the following: DOP, DIDP, DTDP, DUP, mixed 7, 9, 11 alkyl phthalate, and mixed 6, 8, 10 alkyl phthalate; polyester plasticizers such as, for example, DRAPEX®409 and 429 from Witco Chemical, PLASTOLEIN® 9789 from Emery Industries; pentaerythritol ester derivatives such as HERCOFLEX® 707 (Hercules Inc.); and trimellitate plasticizers such as trioctyl trimellitate or triisononyl trimellitate. The type(s) and amount(s) of plasticizer or mixtures of plasticizers utilized will depend upon the combination of physical characteristics desired. Generally from 5 to 100 parts by weight per hundred parts PVC (phr) are contemplated, with preferred ranges of 20 to 80 phr for most wire and cable insulation and jacketing uses.

Conventional effective amounts of optional ingredients are also suggested, such as, carbonate fillers, lubricants, processing aids, and pigments. Representative lubricants are, for example, stearic acid, oxidized polyethylene, paraffin waxes, glycerol monostearate and partial fatty acid esters. Over-lubrication adversely affects electrical resistivity, and consistency of resistivity, therefore careful consideration should be given to the amount of added lubricant beyond the amount of the aforementioned essential metal carboxylate salts. The use of too much lubricant can also result in insufficient fusion and decrease uniformity of extrusion diameter for the insulation or jacketing.

In order to minimize or eliminate plate-out or slipping of the composition on the extruder screw or sleeving on mill rolls during processing, processing aids may be incorporated but are not preferred. Suitable processing aids include, for example, thermoplastic polyurethanes such as ESTANE® 5701 and 5703 polyester based resins sold by The BFGoodrich Company and polyacrylates such as those sold commercially under the Paraloid® designation of Rohm and Haas, Inc. and under the Metablen® trademark of Atochem America, Inc.

Pigments such as titanium dioxide, carbon black, as well as, colorants such as molybdate orange and the like may be added for coloration as well as for light and U.V. blocking and screening purposes.

The conductor covering materials disclosed herein can be adapted for uses as insulation and jacketing in order to comply with flammability and smoke emission standards demanded among the aforementioned commercial designations, while at the same time achieving the physical properties necessary in those commercial uses. As suitable flame retardants/smoke suppressants, one or more of the following compounds may be utilized (amounts are given as "phr" - weight parts per hundred weight parts of PVC):

| Compound | Range (phr) | Preferred Range (phr) |
|---|---|---|
| Antimony Oxide | 1-15 | 2-10 |
| Copper Oxylate | 0.25-10 | 0.5-3 |
| Amine Molybdates | 2-20 | 3-10 |
| Molybdic Oxide | 2-20 | 5-10 |
| MgO/ZnO[1] | 0.5-20 | 1-7 |
| Zinc Borate | 0.5-5 | 1-2 |
| Aluminum Trihydrate* | 5-100 | 5-50 |

[1] solid solution of ZnO in MgO (55% by wt. MgO: 45% by wt. ZnO) sold by Anzon Inc. under the trademark ONGARD®II.
* May also be utilized as a flame/smoke suppressant filler.

It should be noted that some compounds listed above may provide both flammability suppression and or smoke suppression. It should be further noted that for optimum flame and smoke suppressant action, mineral solids should have the proper particle size range, e.g. preferably below 5 microns. Optional fillers include calcium carbonate, especially micronized versions, magnesium oxide, magnesium carbonate, magnesium hydroxide, hydrated aluminum oxide, e.g., aluminum trihydrate, $(Al_2O_3 \bullet 3H_2O)$, and ceramic microspheres ($SiO_2/Al_2O_3$ alloy 0.1 - 300 microns particle size) sold under the trademark ZEOSPHERES® by Zeelan Industries Inc. When utilizing fillers for smoke suppressant properties the, magnesium containing compounds are preferred, with magnesium oxide and magnesium carbonate being most preferred. The preferred levels of magnesium oxide and carbonate will range from about 3 to 50 phr by weight with about 10 to 25 phr being most desirable. Referring to the calcium carbonate fillers, average particle sizes above about 3.5 microns adversely affects the low temperature brittleness properties of the compositions. Moreover, an average particle sizes of about 0.07 to 0.15 microns imparts superior smoke suppressant as well as acid gas suppressant characteristics.

Typically, the maximum optional filler loadings for wire insulation compositions are not more than 50 phr, and filler loadings for jacketing compositions typically contain not more than 100 phr of optional filler.

Additional flame retardant plasticizers may be utilized in the present invention and include, for example, brominated aromatic phthalates such as, for example, PYRONIL® 45 available from Pennwalt and Great Lakes FR-45B (tetrabromophthalic acid bis (2-ethylhexylester); phosphate plasticizers such as for example, triaryl phosphates sold under the trademarks SANTICIZER® 154 from Monsanto, KRONITEX®100 from FMA and PHOSFLEX®41P from Stauffer, and diaryl phosphates such as SANTICIZER 148 (isodecyldiphenyl phosphate) from Monsanto.

The levels of ingredients other than the essential ingredients disclosed herein are not particularly critical to the practice of the invention, provided that such amounts achieve desired effects and do not adversely affect the overall characteristics and properties for the subject uses. The presence of flame and smoke suppressants generally has deleterious effects on dynamic thermal stability of the PVC compounds, due in part to pro-degradative mechanisms of these additives which promote crosslinking and char formation. The articles of this invention have been adapted for improved processing stability equal or better than lead containing embodiments as will be shown below for examples incorporating flame and smoke suppressants.

The methods for preparing the conductor covering material and fabricating the finished products are within the state of the art of the ordinary skilled practitioner. As with preparing the compounds, any method which provides uniform mixing of the ingredients may be used. A preferred procedure involves the steps of dry blending all of the ingredients to homogeneity followed by fluxing the dry blends at elevated temperatures and then dicing into cube or pellet form.

In a suggested practice PVC polymer is first admixed in an intensive powder blender with the stabilizer-(s). If used, any fire and smoke suppressant and/or filler components are then dispersed to homogeneity in the mixture. Plasticizer is then admixed in. If liquid plasticizers are utilized, it is standard practice that the compositions be blended until the dry point is reached, e.g. until the liquid is absorbed into the compound and a free flowing dry powder composition is again obtained. The antioxidants, if called for, can advantageously be admixed in the liquid plasticizer. The desired lubricants may be mixed in at this point. Calcined clay is preferably incorporated into the composition, later or as the last ingredient admixed to minimize contact time with metal surfaces of the mixing apparatus.

The homogeneously admixed dry powder blend is typically melt compounded in a fluxing mixer such as a BANBURY mixer or equivalent or in a continuous mixer such as, for example, a FARREL CONTINUOUS MIXER, BUSS CO-KNEADER or planetary gear extruder. The batch temperatures are maintained within the fusion temperature range of the composition where adequate but not excessive work history is imparted to the fused mass. A critical feature achieved with the formulations is a broadened processing window in which work input is sufficient for development of optimum physical properties without reaching the point of onset of degradation, evidenced by discoloration. The extent of degradation reached in the compounding process appears upon subsequent fabrication into finished articles, under typical extrusion process conditions. The most desirable attributes are evidenced by full development of physical properties for the extrudate, and a high throughput rate without shear burning or rough extrusion characteristics in a conventional extruder fitted with conductor insulation or jacketing die. Methods of fabricating insulated wire and cable are disclosed, for example, in U.S. Patent No. 4,605,818 which is herein incorporated by reference.

## WORKING EMODIMENTS

The following examples will further illustrate preferred embodiments of this invention. While these examples will show one skilled in the art how to operate within the scope of this invention, they are not intended to serve as a limitation on the scope of this invention for such scope is defined only in the claims. The following evaluative test methods were used.

(1) Dynamic Thermal Stability (DTS) is a comparative method to determine the processing capability exhibited in a formulation under heat and constant shear processing conditions. DTS is measured as follows:

A test specimen is loaded into a Brabender Plasti-Corder (Type PL-V150) high shear mixer which is equipped with a torque recorder. A weighed specimen is subjected to predetermined shear and temperature conditions. During the run, small test samples are optionally removed at 2-5 minute intervals and the torque curve is observed along with the visible changes in sample conditions for the run. The dynamic thermal stability degradation time is determined by the time in minutes taken to produce a definite change in torque and visible degradation of the test sample.

(2) Volume resistivity was measured according to: ASTM-D4872

(3) Oven aging at elevated temperature is measured according to: UL 1581 Table 50.145

### Examples

The ingredients listed below in weight parts were HENSCHEL mixed and fused on a BANBURY mixer, followed by milling on a heated roll mill. The fused samples were either extruded or compression molded into test samples.

|  | Control A | Example 1 | Example 2 |
|---|---|---|---|
| PVC | 100 | 100 | 100 |
| DOP* | 50 | 50 | 50 |
| Hydrotalcite[1] | 0.5 | 0 | 0 |
| 13x Zeolite | 0.5 | 0 | 0 |
| hydrotalcite[2] | 0 | 0.5 | 1.0 |
| diketone[3] | 0.05 | 0.05 | 0.05 |
| Calcium Stearate | 0.7 | 0.7 | 0.7 |
| Zinc stearate | 0.3 | 0.3 | 0.3 |
| Calcined Clay | 0 | 5.0 | 5.0 |
| Barium/Zinc salts | 0 | 0.5 | 0 |
| Volume resistivity (x $10^{13}$ ohm.-cm.) | 12 | 12 | 94 |
| Degradation time (min.) | 28 | 28 | 34 |
| @ 205°C 100 rpm, 70 g - load | | | |

* di-2-ethylhexyl phthalate
[1] Alcamizer®1 - hydrated hydrotalcite ex. Kyowa Chem. Ind. Co., Ltd.
[2] Alcamizer®2 - dehydrated hydrotalcite Kyowa Chem.
[3] RHODIASTAB 83 - dibenzoyl methane, ex. Rhone-Polenc

The electrical properties of examples l and 2 are equal or better than the control A which is taught in U.S. Patent No. 5,216,058. It is noted in example 1 that equal volume resistivity can be achieved compared to the control with the substitution of equal amounts of a barium/zinc mixed metal stabilizer for zeolite and addition of inert calcined clay. Surprisingly, both volume resistivity and dynamic thermal stability are enhanced by the removal of Ba/Zn and increasing the amount of hydrotalcite to a level equal to the control combination of hydrotalcite and zeolite. An increase in dynamic thermal stability and electrical resistivity is unexpected in view identical total amounts of stabilizers. It is also illustrated above that the combination of dehydrated hydrotalcite and clay is unexpectedly better than hydrated hydrotalcite and zeolite without clay. Owing to the inexpensiveness of calcined clay compared with zeolite, the advantage is desirable.

The following examples further illustrate unexpected improvements in electrical resistance and dynamic thermal stability achieved in the present invention with decreased total levels of metal carboxylate salt stabilizers, essentially by the elimination of zeolite, reduction by 50% of metal carboxylate levels and incorporation of calcined clay. Also, dehydrated hydrotalcite (Alcamizer® 2) was substituted for the hydrated version (Alcamizer® 1). The surface appearance of extruded articles is expected to be better with dehydrated hydrotalcite. Samples of the following were prepared and tested as in the previous examples.

|  | Control B | Control C | Example 3 |
|---|---|---|---|
| PVC | 100 | 100 | 100 |
| DOP | 50 | 50 | 50 |
| ALCAMIZER 1 | 0.5 | 0.525 | 0 |
| 13X Zeolite | 0.5 | 0.525 | 0 |
| ALCAMIZER 2 | 0 | 0 | 3 |
| RHODIASTAB 83 | 0.05 | 0 | 0.1 |
| Calcium Stearate | 0.7 | 0.7 | 0.3 |
| Zinc Stearate | 0.3 | 0.3 | 0.15 |
| Calcined Clay | 0 | 0 | 5.0 |
| Volume Resistivity (ohm-cm.) | | | |
| x $10^{13}$ Dry | 12 | 10 | 100 |
| x $10^{13}$ Wet* | 8.5 | 6.4 | 73 |
| Degradation time (min.) | 22 | 20 | 44 |
| @ 205°C,100 rpm, 70 g-load | | | |

* measured after 48 hours immersion in $H_2O$ at 23°C

9

The above examples show surprising improvements in both key properties for example 3 compared with control examples B and C as taught in U.S. Patent No. 5,216,018. By reducing the amount of metal salts, elimination of ZEOLITE, addition of calcined clay and substituting hydrotalcite treated by removal of water of crystallization, dry and wet volume resistivity rose by a factor of almost 10 with a doubling of the time to degradation under constant heat and shear. This improvement is significant especially for thin wall cable coverings formed under high shear extrusion conditions.

**Low Flame and Smoke Jacket Compound**

| Base Recipe: | | |
|---|---|---|
| | **Control D** | **Example 4** |
| PVC | 100 | 100 |
| Plasticizer | 55 | 55 |
| Antioxidant | 0.04 | 0.04 |
| $Sb_2O_3$ | 7 | 7 |
| ATH | 10 | 10 |
| Wax Lubricant | 0.65 | 0.5 |
| Tribasic lead Sulfate | 2.6 | 0 |
| Dibasic lead Stearate | 0.15 | 0 |
| Alcamizer® 2 | 0 | 1 |
| Ba/Zn | 0 | 1.5 |
| Ca Stearate | 0 | 0.1 |
| Zn Stearate | 0 | 0.1 |

| Results: | | |
|---|---|---|
| | **Control D** | **Example 4** |
| Specific Gravity | 1.366 | 1.359 |
| Shore A Hardness | 85 | 87 |
| Tensile Strength, psi | 2000 | 1900 |
| Elongation, % | 285 | 285 |
| Dynamic Thermal Stability* Time to degradation, min. | >90 | >90 |
| Volume Resistivity, x10$^{12}$ Ohm-cm | | |
| Dry | 8.4 | 6.3 |
| Wet (48 hrs. room temp.) | 7.6 | 6.3 |
| Air Oven Aging at 113°C for 7 days Elongation Retention, % | 84 | 86 |
| Oil Immersion at 70°C for 4 hours Elongation Retention, % | 76 | 84 |

* BRABENDER Mixer at 190°C, 100 rpm 70 gram load

Example 4 illustrates that flame and smoke retardant electrical insulation can be produced which is devoid of lead and molecular seive zeeolite, and which exhibits commercially desirable properties. Control D illustrates conventional lead stabilized flame and smoke retardant conductor covering containing 2.75 phr of lead stabilizer. Example 4 illustrates the use of 2.7 phr total of the essential stabilizer combination without the use of zeolite or lead and the physical properties and dynamic thermal stability are about as good as the conventional lead containing material. Addition of effective quantities of many flame retardants and especially smoke suppressants are usually accompanied by reduced thermal stability since the intended flame and smoke retarding mechanisms are prodegradative means for increased char formation such as with crosslinking. Premature crosslinking attenuates the dynamic processing window. The formulations within the ambit of the present invention are exemplary even in combination with flame and smoke suppressants.

The above preferred embodiments and examples are given to illustrate the scope and spirit of the present invention. These embodiments and examples will make apparent, to those skilled in the art, other embodiments and examples. These other embodiments and examples are within the contemplation of the present invention. Therefore, the present invention should be limited only by the appended claims.

**Claims**

1. A thermoplastic conductor covering devoid of lead and molecular sieve, comprising 100 parts by weight polyvinyl chloride, from 5 to 100 parts by weight of plasticizer, from 3 to 50 weight parts of calcined clay and a stabilizer system consisting essentially of from 0.5 to 10 weight parts of hydrotalcite, and from 0.1 to 1 weight parts total of at least two organometal salts.

2. Thermoplastic conductor covering of claim 1 wherein said polyvinyl chloride is a homopolymer having an inherent viscosity of from 0.9 to 1.4.

3. Thermoplastic conductor covering of claim 2 wherein said polyvinyl chloride is a homopolymer having an inherent viscosity of from 0.92 to 1.12.

4. Thermoplastic conductor covering of claim 1 wherein said hydrotalcite has the formula selected from the group consisting of:

$$[(M_1^{2+})y_1 \ (M_2^{2+})y_2]_{1-x} \ M_x^{3+}(OH)_2 \ A_{x/n}^{n-} \ mH_2O \qquad (I),$$

$$Mg_{1-x} \ Al_x \ (OH)_2 \ A_{x/n}^{n-} \ mH_2O \qquad (II),$$

and

$$Mg_{1-x} \ Al_x \ (OH)_{2+x} \ mH_2O \qquad (III)$$

wherein $M_1^{2+}$ is at least one divalent metal cation, $M_2^{2+}$ is at least one divalent metal cation, $M^{3+}$ is a trivalent metal cation, $A^{n-}$ is at least one anion having a valency of n and x, y1, y2 and m are defined as:
$0 < x \leq 0.5$, $0 < y_1$, $0 < y_2$, $0.5 \leq (y_1 + y_2) < 1$, and $0 \leq m < 2$.

5. Thermoplastic conductor covering of claim 4 wherein said hydrotalcite is treated with an anionic surface active agent.

6. Thermoplastic conductor covering of claim 1 wherein said hydrotalcite is selected from the group consisting of:

$$[(Mg^{2+})_{y1} \ (Zn^{2+})_{y2}]_{1-x} \ Al_x^{3+}(OH)_2(CO_3)_{x/2}.mH_2O,$$
$$[(Mg^{2+})_{y1} \ (Zn^{2+} \ Cd^{2+})_{y2}]_{1-x} \ Al_x^{3+}(OH)_2(CO_3)_{x/2}.mH_2O,$$
$$[(Mg^{2+} \ Ca^{2+})_{y1} \ (Zn^{2+})_{y2}]_{1-x} \ Al_x^{3+}(OH)_2(CO_3)_{x/2}.mH_2O,$$

and

$$[(Mg^{2+} \ Ca^{2+})_{y1} \ (Zn^{2+} \ Cd^{2+})_{y2}]_{1-x} \ Al_x^{3+}(OH)_2(CO_3)_{x/2}.mH_2O$$

wherein
$0 < x \leq 0.5$, $0 < y_1$, $0 < y_2$, $0.5 \leq (y_1 + y_2) < 1$, and $0 \leq m < 2$.

7. Thermoplastic conductor covering of claim 1 wherein said hydrotalcite has a BET specific surface area of from 5 to 20 $m^2/g$.

8. Thermoplastic conductor covering of claim 1 wherein said hydrotalcite has the following formula:

$$Mg_4 \ Al_2 \ (OH)_{12} \ CO_3^{2-}.$$

9. Thermoplastic conductor covering of claim 1 wherein said at least two organo metal salts are selected from the group consisting of calcium, barium, magnesium, strontium, tin, zinc, cadmium, potassium, aluminum, zirconium and antimony organo metal salts.

10. Thermoplastic conductor covering of claim 9 wherein said at least two organo metal salts contain an organic moiety selected from a group consisting of carboxylates, phenolates, and sulfates.

11. Thermoplastic conductor covering of claim 10 wherein said at least two organo metal salts are carboxylates of calcium and zinc.

12. Thermoplastic conductor covering of claim 10 wherein said organic moiety is selected from the group consisting of hexoic acid, 2-ethylhexoic acid, n-octoic acid, isooctoic acid, pelargonic acid, neodecanoic acid, capric acid, undecylic acid, lauric acid, myristic acid, palmitic acid, margaric acid, stearic acid, 12-hydroxystearic acid, oleic acid, ricinoleic acid, erucic acid, behenic acid, chlorcaproic acid, hydroxy capric acid, benzoic acid, salicylic acid, 5-t-octyl salicylic acid, napthoic acid, 1-naphthalene acetic acid, orthobenzoyl benzoic acid, petroleum naphthenic acids, abietic acid, dihydroabietic acid, hexahydrobenzoic acid, and methyl furoic acid.

13. Thermoplastic conductor covering of claim 11 wherein said at least two organo metal salts are selected from the group consisting of barium di(nonylphenolate), strontium di (nonylphenolate), strontium di-(amylphenolate), barium di(octylphenolate), strontium di(octylphenolate), barium di(nonyl-o-cresolate), cadmium-2-ethyl-hexoate, cadmium laurate, cadmium stearate, zinc caprylate, cadmium caprate, barium stearate, barium-2-ethylhexoate, barium laurate, barium ricinoleate, zinc stearate, aluminum stearate, magnesium stearate, calcium octoate, calcium stearate, cadmium naphthenate, cadmium benzoate, cadmium p-tert butylbenzoate, barium octyl salicylate, strontium epoxy stearate, and cadmium epoxy stearate.

14. Thermoplastic conductor covering of claim 1 wherein said stabilizer system consists essentially of from 3 to 6 weight parts of said hydrotalcite, and said at least two organo metal salts consist of from 0.3 to 0.7 weight parts calcium carboxylate and from 0.1 to 0.3 weight parts zinc carboxylate.

15. A thermoplastic conductor covering devoid of lead and molecular sieve, comprising 100 parts by weight polyvinyl chloride, from 5 to 100 parts by weight of plasticizer, from 3 to 50 weight parts of calcined clay and a stabilizer system consisting essentially of from 0.5 to 10 weight parts of hydrotalcite, from 0.1 to 1 weight parts total of at least two organometal salts, and from 0.02 to 1 weight parts of a $\beta$-diketone.

16. Thermoplastic conductor covering of claim 15 wherein said stabilizer system consists essentially of from 2 to 3 weight parts hydrotalcite, said at least two organo metal salts consist of from 0.3 to 0.5 weight parts calcium carboxylate and from 0.1 to 0.3 weight parts zinc carboxylate.

17. A method of use for a polyvinyl chloride compound for conductor coverings, said compound devoid of lead and molecular sieve, and comprising 100 parts by weight polyvinyl chloride, from 5 to 100 parts by weight of plasticizer, from 3 to 50 weight parts of calcined clay and a stabilizer system consisting essentially of from 0.5 to 10 weight parts of hydrotalcite, and from 0.1 to 1 weight parts total of at least two organometal salts.

18. A method of use for a polyvinyl chloride compound for conductor coverings, said compound devoid of lead and molecular sieve, and comprising 100 parts by weight polyvinyl chloride, from 5 to 100 parts by weight of plasticizer, from 3 to 50 weight parts of calcined clay and a stabilizer system consisting essentially of from 0.5 to 10 weight parts of hydrotalcite, from 0.1 to 1 weight parts total of at least two organometal salts and from 0.02 to 1 weight parts of a $\beta$-diketone.